# EUROPÄISCHE PATENTANMELDUNG

(11) **EP 4 545 316 A1**
(43) Veröffentlichungstag der Anmeldung: **30.04.2025**
(21) Anmeldenummer: 24206827.8
(22) Anmeldetag: 16.10.2024
(51) Int. Cl.: B60C 23/04

(54) **REIFENVENTIL SOWIE REIFENVENTIL MIT REIFENDRUCKÜBERWACHUNGSEINHEIT**

(30) Priorität: 27.10.2023 DE 102023129719
(71) Anmelder: Huf Baolong Electronics Bretten GmbH, 75015 Bretten (DE)
(72) Erfinder: KRAFT, Andreas, 75053 Gondelsheim (DE); ARNOLDO, Sven, 76316 Malsch (DE); GAMER, Benedikt, 75045 Walzbachtal (DE); SEIFERT, André, 75181 Pforzheim (DE)
(74) Vertreter: Twelmeier Mommer & Partner

(57) **Zusammenfassung**

Beschrieben wird Reifenventil für einen Luftreifen eines Fahrzeugs, mit einem Ventilschaft, der ein Außengewinde aufweist, einer zu dem Außengewinde passenden Mutter, und einem kalottenförmig gewölbten Träger für eine Reifendrucküberwachungseinheit, die einen Drucksensor und eine Sendeeinrichtung zur drahtlosen Aussendung von Druckdaten enthält, wobei der Träger in Längsrichtung des Ventilschafts beweglich ist und mit einem ersten Abschnitt des Ventilschafts einen Formschluss bildet, der eine Drehbewegung relativ zu dem Ventilschaft verhindert, aber eine Relativbewegung in Längsrichtung des Ventilschafts ermöglicht. Erfindungsgemäß ist vorgesehen, dass der Ventilschaft einen zweiten Abschnitt mit einer Außenkontur aufweist, die eine Drehbewegung einer Reifendrucküberwachungseinheit relativ zu dem Ventilschaft verhindert.

## Beschreibung

Die Erfindung geht aus von einem Reifenventil für einen Luftreifen eines Fahrzeugs mit den im Oberbegriff des Anspruchs 1 angegebenen Merkmalen. Ein solches Reifenventil ist beispielsweise aus EP 4 311 696 A1 bekannt. Reifenventile, die Reifendrucküberwachungseinheiten tragen, sind beispielsweise auch aus DE 10 2015 210 461 A1, DE 101 31 168 A1, DE 10 2015 114 102 A1, WO 2016/008091 A1, CN 102 259 566 B, US 2021/0252922 A1, US 2021/0276376 A1 und US 2023/0091982 A1 bekannt.

Derartige Reifenventile werden verwendet, um Druckluft in Reifen zu pumpen oder auch um Druckluft aus Reifen abzulassen. Zudem dienen derartige Reifenventile auch zur Befestigung von Reifendrucküberwachungseinheiten, die drahtlos Druckdaten aussenden, in Luftreifen.

Bei der Montage wird in der Regel der Schaft eines solchen Reifenventils, an dessen gewölbtem Träger gelenkig eine Reifendrucküberwachungseinheit befestigt ist, in eine Felgenbohrung gesteckt und dann durch Anziehen einer den Ventilschaft umgebenden Mutter das Reifenventils an dem Felgenbett fixiert. Im montierten Zustand stützt sich die Reifendrucküberwachungseinheit üblicherweise an dem Felgenbett ab und muss deshalb vor dem endgültigen Anziehen der Mutter in die richtige Position gedreht oder gekippt werden. Das aus DE 10 2015 210 461 A1 bekannte Reifenventil enthält deshalb ein Verformungselement, das eine Zwischenposition der Mutter definiert, etwa einen auf dem Außengewinde des Ventilschafts positionierten Kunststoffring. Nach einem anfänglichen Anziehen der Mutter wird diese Zwischenposition erreicht, in der dann die Reifendrucküberwachungseinheit in die richtige Position relativ zum Felgenbett gedreht bzw. gekippt werden kann und gleichzeitig eine Schraube am Ende des Ventilschaftes angezogen wird, die die Reifendrucküberwachungseinheit zum Ventilschaft fixiert. Bei einem weiteren Anziehen der Mutter wird dann ein durch das Verformungselement erzeugter Widerstand überwunden und das Reifenventil gegen das Felgenbett gedrückt und fixiert.

Nachteilig an einem solchen Verformungselement ist, dass die Komplexität der Verschraubung erhöht ist und es bei nicht automatisierten Verschraubungen zu falschen Positionierungen kommen kann.

Aufgabe der vorliegenden Erfindung ist es, einen Weg aufzuzeigen, wie mit geringerem Aufwand ein einfach zu montierendes Reifenventil, das eine Reifendrucküberwachungseinheit tragen kann, hergestellt werden kann.

Diese Aufgabe wird durch ein Reifenventil mit den im Anspruch 1 angegebenen Merkmalen sowie durch ein System mit einem solchen Reifenventil und einer Reifendrucküberwachungseinheit gelöst. Vorteilhafte Weiterbildungen der Erfindung sind Gegenstand von Unteransprüchen.

Bei einem erfindungsgemäßen Reifenventil ist der gewölbte Träger, auf dem im montierten Zustand eine Reifendrucküberwachungseinheit sitzt, in Längsrichtung des Ventilschafts beweglich. Ein Formschluss zwischen dem Ventilschaft und dem Träger verhindert dabei eine Drehbewegung, lässt aber eine Verschiebung des Trägers entlang des Ventilschafts zu. Ein solcher Formschluss kann beispielsweise durch in Längsrichtung verlaufende Nuten in dem betreffenden Abschnitt des Ventilschafts und in diese Nuten eingreifende Vorsprünge an dem Träger (bzw. umgekehrt) erreicht werden oder allgemein gesagt durch einen von der Kreisform abweichenden Querschnitt eines Abschnitts des Ventilschafts, entlang welchem der Träger beweglich ist, und einen dazu passenden Kanal, der durch den Träger hindurch verläuft.

Bei der Montage eines Reifenventils an einer Felge wird durch Anziehen einer den Ventilschaft umgebenden Mutter der Träger an dem Ventilschaft entlang verschoben, bis die Reifendrucküberwachungseinheit zwischen dem Träger und einem Anschlag eingespannt ist. Dieser Anschlag kann einstückig mit dem Ventilschaft ausgebildet sein oder von einem separaten Befestigungselement gebildet werden, z.B. dem Kopf einer Schraube.

Die Verschraubung eines erfindungsgemäßen Ventils lässt sich somit konstruktiv einfach und kostengünstig ausführen. Zudem kann der gewölbte Träger aus Kunststoff hergestellt werden, was im Vergleich zu einer herkömmlichen einstückigen Ausbildung von Träger und Ventilschaft wesentlich kostengünstiger ist. Der Ventilschaft kann, wie bei herkömmlichen Ventilen, aus Metall hergestellt werden, hat jedoch wegen des separat hergestellten Trägers eine einfachere Form und lässt sich deshalb vergleichsweise kostengünstig herstellen.

Eine vorteilhafte Weiterbildung der Erfindung sieht vor, dass der Träger eine gewölbte Oberseite aufweist und an seiner von der Wölbung abgewandten Unterseite eine Dichtung hat. Im montierten Zustand liegt diese Dichtung an einer Felge an und sorgt für eine Abdichtung der Felgenbohrung. Zudem kann die Dichtung in einem vormontierten Zustand des Reifenventils als Rutschsicherung verhindern, dass sich der Träger von dem Ventilschaft löst. Vorteilhaft kann so das System aus Ventilschaft, Träger und Reifendrucküberwachungseinheit vormontiert werden.

Erfindungsgemäß ist vorgesehen, dass der Ventilschaft einen zweiten Abschnitt mit einer Außenkontur aufweist, die eine Drehbewegung einer Reifendrucküberwachungseinheit relativ zu dem Ventilschaft verhindert. Auf diese Weise lässt sich zuverlässig ein Verdrehen der Reifendrucküberwachungseinheit relativ zum Ventilschaft verhindern und so die Montage an einer Felge erleichtern.

Weitere Einzelheiten und Vorteile der Erfindung werden an einem Ausführungsbeispiel unter Bezugnahme auf die beigefügten Zeichnungen erläutert. Es zeigen:
- Fig. 1: eine Explosionsdarstellung eines Ausführungsbeispiels eines erfindungsgemäßen Reifenventils mit einer Reifendrucküberwachungseinheit; und
- Fig. 2: eine weitere Explosionsdarstellung des Reifenventils mit der Reifendrucküberwachungseinheit aus einem anderem Blickwinkel.

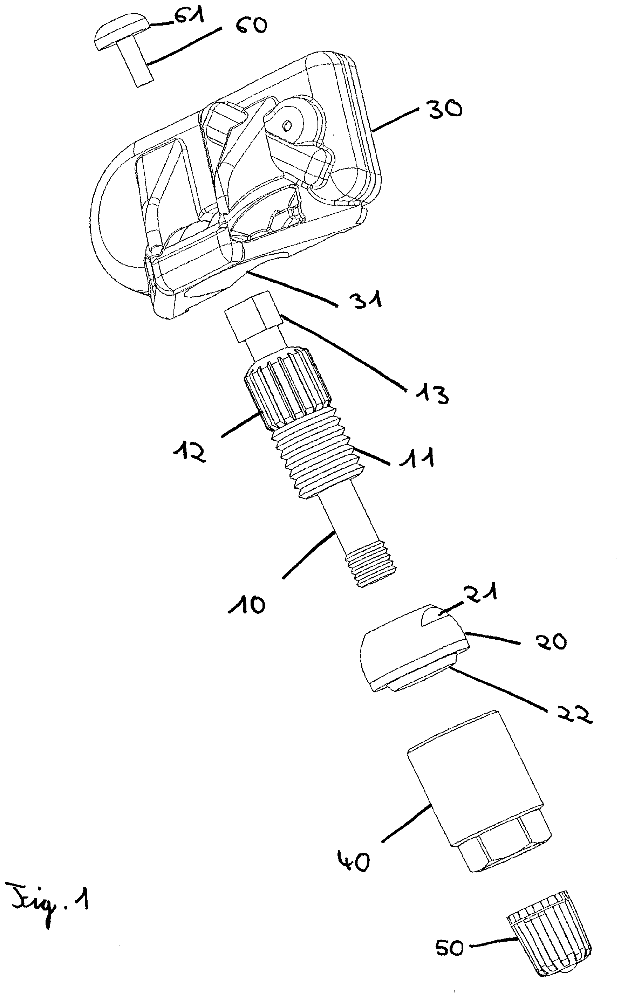

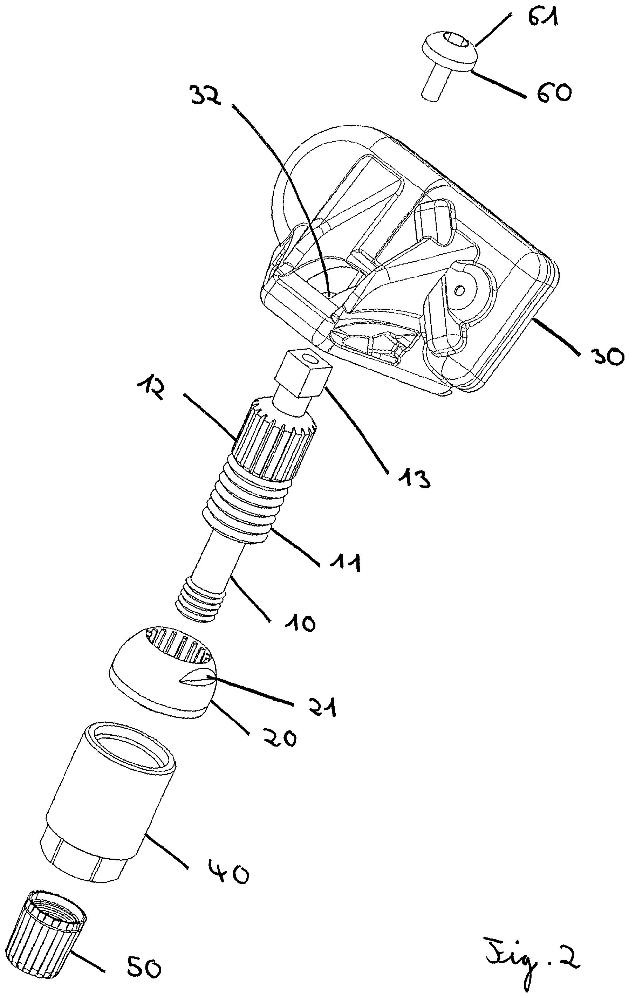

Das in den Figuren 1 und 2 gezeigte Reifenventil hat einen Ventilschaft 10 mit einem Außengewinde 11, einen Träger 20 für eine Reifendrucküberwachungseinheit 30, eine zu dem Außengewinde 11 passende Mutter 40, beispielsweise eine Überwurfmutter, eine Schutzkappe 50 für einen Endabschnitt des Ventilschafts 10, und ein Befestigungselement 60, um die Reifendrucküberwachungseinheit 30 im montierten Zustand gegen den Träger 20 zu drücken. Dieses Reifenventil bildet zusammen mit der Reifendrucküberwachungseinheit 30, die einen Drucksensor und eine Sendeeinrichtung zur drahtlosen Aussendung von Druckdaten enthält, ein System.

Zur Montage werden die Reifendrucküberwachungseinheit 30 und der Träger 20 auf den Ventilschaft 10 geschoben und der Ventilschaft 10 in eine Felgenbohrung gesteckt. Träger 20 und Reifendrucküberwachungseinheit 30 sind dann auf der inneren Seite der Felge angeordnet, d.h. der Seite, die später in dem Luftreifen ist. Die Mutter 40 wird dann auf der äußeren Seite der Felge, d.h. der Seite, die später außerhalb des Luftreifens ist, auf den Ventilschaft 10 aufgeschoben und auf das Außengewinde 11 geschraubt. Durch Anziehen der Mutter 40 wird dann der Träger 20 gegen die Reifendrucküberwachungseinheit 30 gedrückt. Ein Anschlag 61 verhindert dabei, dass sich die Reifendrucküberwachungseinheit 30 von dem Ventilschaft 10 löst. Wenn die Mutter 40 ganz angezogen ist, ist die Reifendrucküberwachungseinheit 30 dann zwischen dem Träger 20 und dem Anschlag 61 eingespannt.

Der Anschlag 61 kann einstückig mit dem Ventilschaft 10 ausgebildet sein. Bei dem gezeigten Ausführungsbeispiel wird der Anschlag 61 aber von einem separaten Befestigungselement 60 gebildet, beispielsweise dem Kopf einer Schraube, die in den Ventilschaft 11 geschraubt ist. Bei dem gezeigten Ausführungsbeispiel ist das Befestigungselement 60 eine Schraube mit einem Flachrundkopf. Derartige Schrauben werden manchmal auch als Linsenschrauben bezeichnet. Das Befestigungselement 60 kann beispielsweise eine Innensechskantschraube sein.

Beim Anziehen der Mutter 40 wird der Ventilschaft 10 weiter aus der Felgenbohrung herausgezogen und der Träger 20 somit zu der Felge hin bewegt. Ein Formschluss zwischen dem Träger 20 und einem ersten Abschnitt 12 des Ventilschafts 10 verhindert dabei eine Drehbewegung des Trägers 20 relativ zu dem Ventilschaft 10. Der Träger 20 kann sich also nur in Längsrichtung des Ventilschafts 10 relativ zu dem Ventilschaft 10 bewegen. Ein solcher Formschluss kann beispielsweise durch in Längsrichtung des Ventilschafts 10 verlaufene Nuten oder Vorsprünge und komplementär dazu passende Vorsprünge bzw. Nuten an eine Innenseite einer durchgehenden Öffnung des Trägers 20 bewirkt werden. Allgemein gesagt hat ein durch den Träger 20 führender Kanal einen von der Kreisform abweichenden Querschnitt und der von dem Träger 20 umgebene Abschnitt 12 des Ventilschafts 10 einen von der Kreisform abweichenden Querschnitt, der zu dem Innenquerschnitt des Trägers 20 passt.

Beim Anziehen der Mutter 40 werden somit Träger 20 und Reifendrucküberwachungseinheit 30 aufeinander zu bewegt, bis die Reifendrucküberwachungseinheit schließlich zwischen Träger 20 und dem Anschlag 61, der bei dem gezeigten Ausführungsbeispiel von einem Befestigungselement 60 gebildet ist, eingespannt ist. Die Reifendrucküberwachungseinheit 30 umgibt dabei einen zweiten Abschnitt 13 des Ventilschafts 10, der eine Außenkontur aufweist, die eine Drehbewegung der Reifendrucküberwachungseinheit 30 relativ zu dem Ventilschaft 10 verhindert.

Beispielsweise kann der zweite Abschnitt 13 einen kantigen Querschnitt, insbesondere einen vierkantigen Querschnitt haben.

Für Fahrzeuge sind Felgen mit unterschiedlichen Felgenbetttiefen gebräuchlich. Zur Anpassung an eine gegebene Felgenbetttiefe lässt sich die Reifendrucküberwachungseinheit 30 auf der gewölbten Oberseite des Trägers 20 in eine Position schwenken, in der sie sich an dem Felgenbett abstützt. Die Reifendrucküberwachungseinrichtung 30 hat dazu eine gerundete, beispielsweise kalottenförmige Ausnehmung 31, die zu der gewölbten Oberseite des Trägers 20, beispielsweise einer kalottenförmig gewölbten Oberseite des Trägers 20, passt.

Die gewölbte Oberseite des Trägers 20 kann zwei sich gegenüberliegende seitliche Aussparungen 21 aufweisen, die mit einer entsprechenden Gegenkontur der Reifendrucküberwachungseinheit 30 zusammenwirken. Dadurch können mechanische Vorteile erzielt werden, insbesondere der Winkelverstellbereich gesichert und die Flächenanpressung aus einem Schlitz 32 der Reifendrucküberwachungseinrichtung 30 reduziert werden.

Der Träger 20 hat an seiner von der Reifendrucküberwachungseinrichtung 30 abgewandten Unterseite eine Dichtung 22, die im montierten Zustand an einer Innenseite einer Felge anliegt. Die Dichtung 22 umgibt den Ventilschaft 10 und kann in einem vormontierten Zustand als Rutschsicherung den Träger 20 an dem Ventilschaft 10 halten.

Das in den Figuren 1 und 2 gezeigte System kann zu einer gut handhabbaren Einheit vormontiert werden, indem die Reifendrucküberwachungseinheit 30 und der Träger 20 auf den Ventilschaft 10 aufgesteckt werden. Der Anschlag 61, der einstückig mit dem Ventilschaft 10 ausgebildet sein kann oder von einem separaten, an dem Ventilschaft 10 angebrachten Befestigungselement 60 gebildet sein kann, verhindert, dass die Reifendrucküberwachungseinheit 30 von dem hinteren Ende des Ventilschafts 10 rutscht. Die Dichtung 22 des Trägers 20 hält durch Reibungskräfte den Träger 20 an dem Ventilschaft 10, so dass die Reifendrucküberwachungseinheit 30 zwischen Träger 20 und Anschlag 61 gefangen ist. Mutter 40 und Schutzkappe 50 können bei einem vormontierten System ebenfalls an dem Ventilschaft 10 angebracht, etwa aufgeschraubt sein, müssen zur Montage aber vorübergehend entfernt werden, damit der Ventilschaft 11 in eine Felgenbohrung gesteckt werden kann.

Der Träger 20 kann kostengünstig mit einem Körper aus Kunststoff hergestellt werden, an dessen Unterseite dann eine Dichtung 22 angebracht wird, beispielsweise angeklebt. Der Ventilschaft 10 kann dagegen wie bei herkömmlichen Ventilen auch aus Metall hergestellt werden.

### Bezugszeichenliste

- 10: Ventilschaft
- 11: Außengewinde
- 12: erster Abschnitt
- 13: zweiter Abschnitt
- 20: Träger
- 21: Aussparung
- 22: Dichtung
- 30: Reifendrucküberwachungseinheit
- 31: Ausnehmung
- 32: Schlitz
- 40: Mutter
- 50: Schutzkappe
- 60: Befestigungselement
- 61: Anschlag

## Patentansprüche

1. Reifenventil für einen Luftreifen eines Fahrzeugs, mit
einem Ventilschaft (10), der ein Außengewinde (11) aufweist,
einer zu dem Außengewinde (11) passenden Mutter (40), und
einem kalottenförmig gewölbten Träger (20) für eine Reifendrucküberwachungseinheit (30), die einen Drucksensor und eine Sendeeinrichtung zur drahtlosen Aussendung von Druckdaten enthält,
wobei der Träger (20) in Längsrichtung des Ventilschafts (10) beweglich ist und mit einem ersten Abschnitt (12) des Ventilschafts (10) einen Formschluss bildet, der eine Drehbewegung relativ zu dem Ventilschaft (10) verhindert, aber eine Relativbewegung in Längsrichtung des Ventilschafts (10) ermöglicht,
**dadurch gekennzeichnet, dass**
der Ventilschaft (11) einen zweiten Abschnitt (13) mit einer Außenkontur aufweist, die eine Drehbewegung einer Reifendrucküberwachungseinheit (30) relativ zu dem Ventilschaft (11) verhindert.

2. Reifenventil nach Anspruch 1, **dadurch gekennzeichnet, dass** der Träger (20) an einer von seiner Wölbung abgewandten Unterseite eine Dichtung (22) aufweist, die den Ventilschaft (11) umgibt.

3. Reifenventil nach einem der vorstehenden Ansprüche, **dadurch gekennzeichnet, dass** die Dichtung (22) in einem vormontierten Zustand des Reifenventils an dem Ventilschaft (10) anliegt und eine Rutschsicherung des Trägers (20) bildet.

4. Reifenventil nach einem der vorstehenden Ansprüche, **dadurch gekennzeichnet, dass** Träger (20) aus Kunststoff ist.

5. Reifenventil nach einem der vorstehenden Ansprüche, **dadurch gekennzeichnet, dass** der Träger (20) an seiner gewölbten Oberseite zwei sich gegenüberliegende Aussparungen (21) aufweist.

6. Reifenventil nach einem der vorstehenden Ansprüche, **gekennzeichnet durch** einen Anschlag (61), gegen den eine Reifendrucküberwachungseinheit (30) im montierten Zustand von dem Träger (20) gedrückt wird.

7. Reifenventil nach Anspruch 6, **dadurch gekennzeichnet, dass** der Anschlag (61) von einem Kopf einer Schraube, vorzugsweise einem Flachrundkopf, gebildet ist.

8. System mit einem Reifenventil nach einem der vorstehenden Ansprüche und einer Reifendrucküberwachungseinheit.
